# EUROPEAN PATENT SPECIFICATION

(11) **EP 0 998 001 B1**
(45) Date of publication and mention of the grant of the patent: **01.03.2006**
(21) Application number: 99919526.6
(22) Date of filing: 11.05.1999
(51) Int. Cl.: H02G 13/00, H02H 9/04, H01B 17/42

(54) **METHOD OF PREVENTING BREAK IN INSULATED WIRE AND INSTANTANEOUS POWER FAILURE**
VERFAHREN ZUR VERHINDERUNG VON BRÜCHEN IN ELEKTRISCHEN KABELN UND VON AUGENBLICKLICHEN STROMFEHLERN
PROCEDE PERMETTANT D'EVITER LA RUPTURE DE FILS ELECTRIQUES ISOLES ET LES COUPURES DE COURANT INSTANTANEES

(30) Priority: 12.05.1998 JP 12932898
(43) Date of publication of application: 03.05.2000
(73) Proprietor: Kyushu Electric Power Co., Inc., Fukuoka-ken 810-0004 (JP)
(72) Inventor: MOROOKA, Yasunari Kyushu Electric Power Co., Inc., Fukuoka Fukuoka 810-0004 (JP)
(74) Representative: Müller-Boré & Partner Patentanwälte
(86) International application number: PCT/JP1999/002418
(87) International publication number: WO 1999/059230

(56) References cited:
- JP-A- 4 347 534
- JP-A- 9 331 630
- JP-A- 56 022 518
- JP-B1- 47 045 791
- JP-U- 60 160 414

## Description

### Technical Field

The present invention relates to a method of preventing insulated wire breakage and instantaneous power interruption caused by a lightning surge in the neighbourhood of an insulator in a high voltage overhead distribution system.

### Background Art

The mechanism which causes breakage of insulated wire is well known. When an insulating cover is punctured by a lightning surge in the neighbourhood of a supporting insulator, multiphase flashover is followed by AC follow current through the supporting insulator and a metallic arm to which it is fixed. The conductor of the insulated wire is vaporized and caused to break by arcing heat as a result of the flow of AC short circuit current, which is concentrated at the above-mentioned punctured portion. To prevent such insulated wire breakage it is important that AC follow current occurring along a discharge circuit is cut off after the discharge circuit is formed by a lightning surge.

To solve these problems, applicants already disclosed, in Japanese Patent Application No. Hei 8-171709 (publication number JP 9 331 630 A), a method of preventing insulated wire breakage and instantaneous power interruption caused by a lightning surge in an overhead distribution system including insulated wire, in which the conductor of said insulated wire is directly or indirectly exposed at a point spaced by a predetermined length from a point at which the insulated wire is supported by an insulator, the predetermined length being such that it is possible for creeping flashover to occur due to a lightning surge, but impossible for this to be followed by AC follow current. This method has the effect that creeping discharge over the outer surface of the insulated wire is not followed by an AC short circuit and wire breakage and instantaneous interruption are not caused when an insulation breakdown point of the insulated wire cover is separated from a supporting insulator by a distance of 75 cm in the case of a 6.6 kV overhead distribution system.

### Disclosure of Invention

This method, nevertheless, needs research about the thickness of the insulating cover and the like, as the insulating cover is frequently punctured before creeping discharge occurs in the case of applied high voltage.

Thus, the problem to be solved by the present invention is to provide a method such that creeping discharge is induced with certainty without puncture of an insulated wire after researching the creeping discharge characteristic of the insulated wire.

To solve the aforementioned problem, the present invention provides a method of preventing insulated wire breakage and instantaneous power interruption caused by a lightning surge in an overhead distribution system comprising a first insulated wire supported at a support point by a supporting insulator, characterized by comprising the steps of: providing a second insulated wire for field relaxation having a length equal to twice a distance from said support point to a predetermined position along said first insulated wire, said predetermined position being such that creeping flashover is caused by a lightning surge from said support point but is not followed by AC follow current, when a conductor of said first insulated wire is exposed either directly or indirectly to the outside at the said position, disposing said second insulated wire for field relaxation in parallel to said first insulated wire, supporting the central portion of said second insulated wire by said insulator, electrically connecting both ends of a conductor of said second insulated wire for field relaxation to the said conductor of said first insulated wire and covering their connected portions with respective insulating covers.

The invention also provides another method of preventing insulated wire breakage and instantaneous power interruption caused by a lightning surge in an overhead distribution system comprising a first insulated wire supported at a support point by a supporting insulator, characterized by comprising the steps of: providing a second insulated wire as a grounded side back electrode having a length equal to a distance from said support point to a predetermined position along said first insulated wire, said predetermined position being such that creeping flashover is caused by a lightning surge from said support point but is not followed by AC follow current, when a conductor of said first insulated wire is exposed either directly or indirectly to the outside at the said position, disposing said second insulated wire in parallel to said first insulated wire, electrically connecting a first, non-insulated, end of a conductor of said second insulated wire to a grounded terminal of said supporting insulator and insulating a second, insulated, end of the said conductor of said second insulated wire with insulating material from a discharging electrode disposed on said first insulated wire at said predetermined position.

### Brief Description of Drawings

Fig. 1 is a schematic drawing showing a research test for creeping discharge character istic.
Fig. 2 is a graph showing a characteristic relationship between thickness of insulating layer and maximum applied voltage without causing puncture.
Fig. 3 is a graph showing a characteristic relationship between applied voltage and limiting voltage.
Fig. 4 is a graph showing creeping discharge voltage-time characteristic.
Fig. 5 is a graph showing a relationship between applied voltage and time until flashover.
Fig. 6 is a sectional view of a first embodiment according to the present invention.
Fig. 7 is a sectional view of a second embodiment according to the present invention.
Fig. 8 is a graph showing creeping discharge voltage-time characteristic.

### Best Mode for Carrying Out the Invention

Practical embodiments of the present invention are described as follows.

### 1. Summary of test

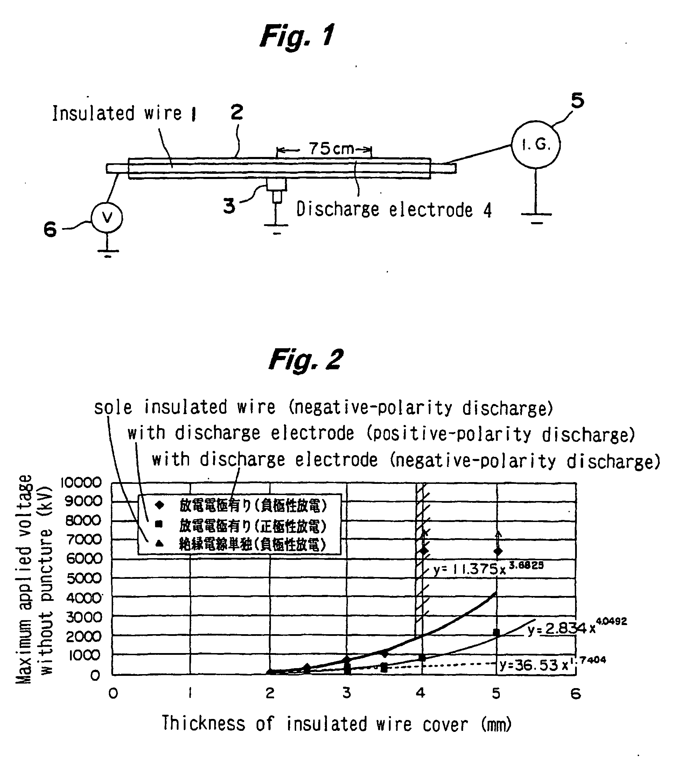

A test was conducted to investigate the insulating efficiency of insulated wire and insulating tube, and limiting voltage based on creeping discharge. The basic outline of the test is shown in Fig. 1. An insulated wire 1 with cover 2 was supported by a pin type insulator 3 and fixed by copper binding of 1.2 mm diameter. A discharge electrode 4 was constructed by sticking a nail into insulated wire 1 at a point separated by 75 cm from pin type insulator 3. A lightning impulse voltage (1.2 / 50 µs) was applied to one end of insulated wire 1 with varying crest value by impulse generator 5, and the voltage (limiting voltage) generated relative to ground at that time and time until occurrence of creeping discharge or puncture were relationally measured by voltmeter 6. A test was conducted to investigate the efficiency of the insulated wire alone (without insulator) by short circuiting the insulator 3 using copper binding. A test was also conducted to investigate the efficiency of the insulating cover by itself without inserting the nail and causing creeping discharge.

### 2. Result of test

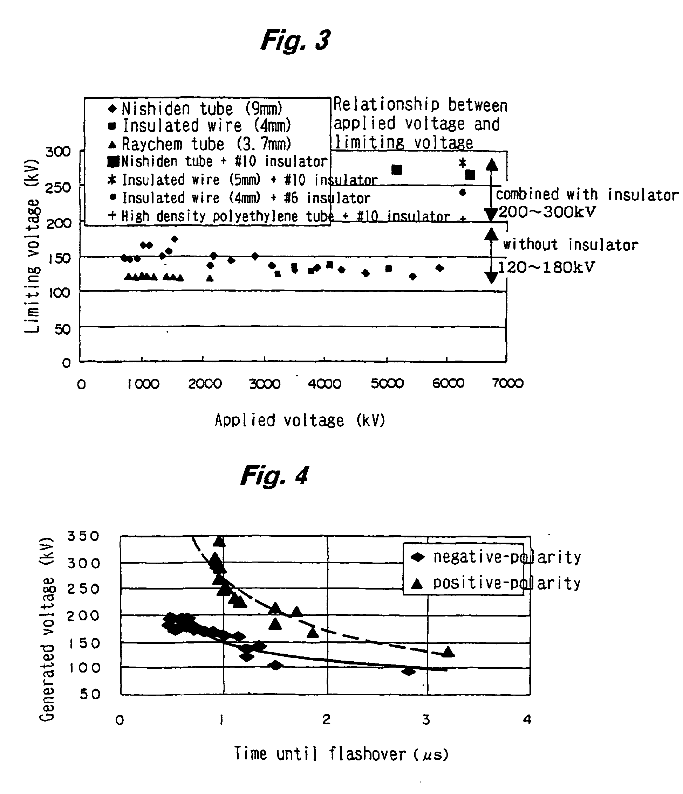

The relationship between the thickness of the insulating cover and the maximum voltage that can be applied without causing a puncture on each insulating cover (hereinafter called simply maximum applied voltage) is shown in Fig. 2 for the case of the insulated wire by itself and the case where a creeping discharge electrode is provided. It can be seen from this that provision of a creeping discharge electrode allows a higher voltage to be applied and restricts the voltage applied to the insulating cover by creeping discharge in comparison with the insulated wire by itself. It can further be seen that this effect is more marked as the thickness of the insulating cover increases and for a negative-polarity voltage (voltage such that the wire conductor is negative and the grounded side positive) in comparison with a positive voltage. In the case of a negative-polarity applied voltage, the maximum applied voltage rapidly increases for thicknesses of the insulating cover of 4 mm or more and a voltage of 6,200 kV can be applied without puncture. Fig. 3 shows limiting voltage of the insulating cover caused by creeping discharge. It can be seen that an insulated wire with a predetermined level of insulating efficiency can withstand puncture even though an increasing voltage is applied, as the limiting voltage without the combination with a supporting insulator is dispersed within the range from 120-180 kV irrespective of the applied voltage. It can also be seen that the limiting voltage in the case of combining with an insulator is dispersed within 200-300 kV because the delay until creeping discharge occurs becomes long when a supporting insulator is added and the voltage applied to the insulating cover becomes larger during that time.

The creeping discharge voltage-time characteristic (Fig. 4) and the relationship between applied voltage and time until flashover were precisely researched to clarify the influence of the polarity of the applied voltage on creeping discharge. Considerably higher voltages are generated in the case of positive-polarity compared with negative-polarity (Fig.4).

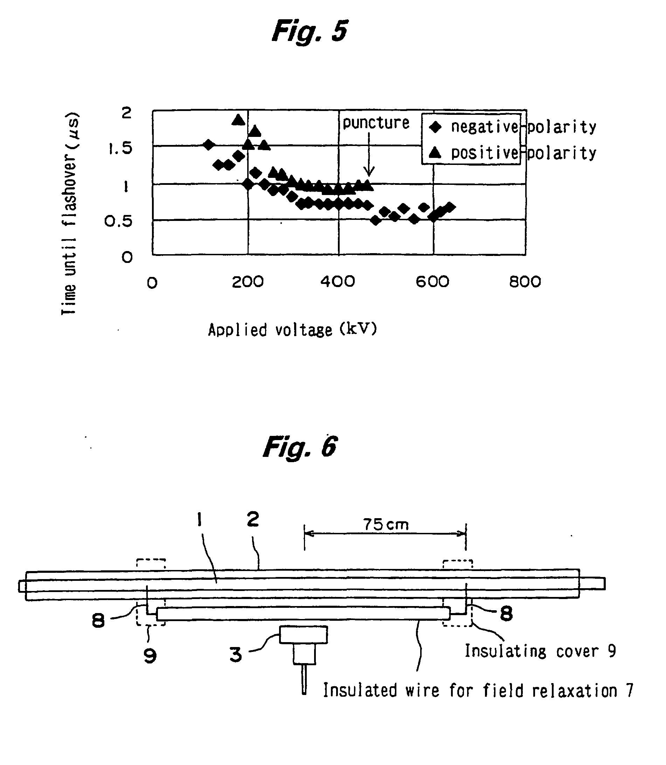

It is presumed that positive-polarity creeping discharge does not occur smoothly in comparison with negative one because the positive-polarity case needs a longer time until flashover compared with the negative-polarity case (Fig. 5). It is considered that positive-polarity creeping discharge takes more time until flashover and the generated voltage becomes high (Fig. 4), and as a result the maximum applied voltage becomes low (Fig. 2).

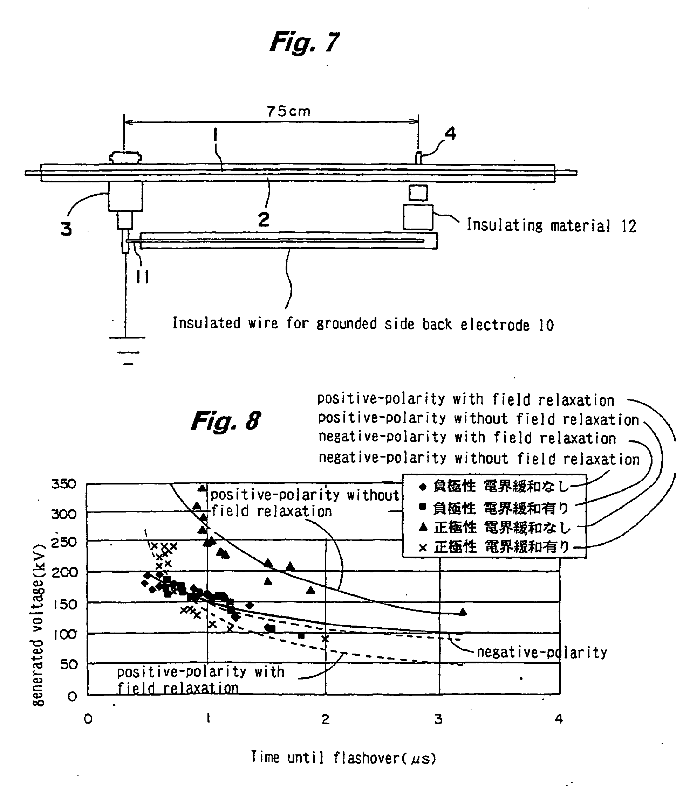

As this influence of polarity could not be neglected for practical use, the applicants invented two methods (Figs. 6, 7) for cancelling the influence of polarity and checked the effect by experiment. It is considered that, in a positive-polarity creeping discharge, free electrons in space are bound under the influence of the field over the outer surface of the electric wire and cannot contribute to the progress of creeping discharge. It is therefore proposed to relax the field over the outer surface of the wire.

### First embodiment

Fig. 6 is a sectional view showing the construction of a first embodiment. An insulated wire for field relaxation 7 is disposed to adhere to insulated wire 1 between insulated wire 1 and ground. Each conductor end 8 of this insulated wire for field relaxation is electrically connected to insulated wire 1 and insulated with an insulated cover 9 at a point spaced 75 cm away from insulator 3.

### Second embodiment

Fig. 7 is a sectional view showing the construction of a second embodiment. A grounded side back electrode 10 is disposed on the ground side of insulated wire 1 with one non-insulated end 11 of the conductor connected to the ground terminal of insulator 3 and another, insulated, end insulated from insulated wire 1 by insulating material 12. The distance between insulator 3 and insulating material 12 is 75 cm.

The method using an insulated wire for field relaxation 7 is improved, as shown in Fig.8, in that a positive-polarity creeping discharge is generated according to the same voltage-time characteristic as a negative-polarity one and creeping discharge is generated smoothly. In the method using a grounded side back electrode 10, flash-over runs along the surface of insulated wire (main line) 1 when a negative-polarity voltage is applied and flashover runs along the surface of insulated wire for grounded side back electrode 10 when a positive-polarity voltage is applied. Thus, insulated wire with an insulation thickness of 4 mm, which had been caused to puncture at an applied positive-polarity voltage of 854 kV, is improved so as to withstand puncture even at an applied positive voltage of 6,200 kV, the same as the applied negative-polarity voltage.
Lightning impulse test using a simulated distribution line in practical scale

### 1. Summary of test

Generation of creeping discharge along the necessary distance (75 cm) is confirmed using a simulated distribution line, taking various measurements and applying large lightning impulse current (maximum current 17 kA, 1.5 /11 µs) generated by a large-sized impulse generator (maximum generating voltage 12 MV).

### 2. Result of test

The result of the test is shown in Table 1.

The following is understood relating to such lightning impulse current as approximately 17 kA of lightning impulse peak current (approximately 30 % in occurrence rate) from this test result.
(1) It is possible to generate creeping discharge without causing puncture with 4 mm or more of power cable insulation thickness, if an overhead ground wire is used, and with 6 mm or more of power cable insulation thickness, if an overhead ground wire is not used.
(2) By the method nullifying the effect of the polarity of lightning it is possible to reduce the necessary insulation thickness of the power cable to 3 mm or more if an overhead ground wire is used and 4 mm or more if an overhead ground wire is not used.

As mentioned above, an investigation of the creeping discharge characteristic of insulated wire has shown that the voltage limiting effect of the creeping discharge is larger than expected. According to the present invention, therefore, it is possible that insulated wire with insulating efficiency of a predetermined level is not punctured.
Moreover, although the creeping discharge characteristic is often affected by the polarity of the applied voltage and does not exhibit the voltage-limiting effect, it is also possible to eliminate the effect of the polarity of the applied voltage.

### Industrial Applicability

The present invention is applicable in the electric power field for preventing breakage of insulated wire and instantaneous interruption by lightning surges in high voltage overhead distribution systems.

## Claims

1. A method of preventing insulated wire breakage and instantaneous power interruption caused by a lightning surge in an overhead distribution system comprising a first insulated wire (1) supported at a support point by a supporting insulator (3), **characterized by** comprising the steps of:
providing a second insulated wire (10) for field relaxation having a length equal to twice a distance from said support point to a predetermined position along said first insulated wire (1), said predetermined position being such that creeping flashover is caused by a lightning surge from said support point but is not followed by AC follow current, when a conductor of said first insulated wire (1) is exposed either directly or indirectly to the outside at the said position,
disposing said second insulated wire (10) for field relaxation in parallel to said first insulated wire (1),
supporting the central portion of said second insulated wire (1) by said insulator (3),
electrically connecting both ends (8, 8) of a conductor of said second insulated wire (10) for field relaxation to the said conductor of said first insulated wire (1) and
covering their connected portions with respective insulating covers (9, 9).

2. A method of preventing insulated wire breakage and instantaneous power interruption caused by a lightning surge in an overhead distribution system comprising a first insulated wire (1) supported at a support point by a supporting insulator (3), **characterized by** comprising the steps of:
providing a second insulated wire (10) as a grounded side back electrode having a length equal to a distance from said support point to a predetermined position along said first insulated wire (1), said predetermined position being such that creeping flashover is caused by a lightning surge from said support point but is not followed by AC follow current, when a conductor of said first insulated wire (1) is exposed either directly or indirectly to the outside at the said position,
disposing said second insulated wire (10) in parallel to said first insulated wire (1), electrically connecting a first, non-insulated, end (11) of a conductor of said second insulated wire (10) to a grounded terminal of said supporting insulator (3) and
insulating a second, insulated, end of the said conductor of said second insulated wire (10) with insulating material (12) from a discharging electrode (4) disposed on said first insulated wire (1) at said predetermined position.

## Revendications

1. Procédé permettant d'éviter la rupture de fils électriques isolés et les coupures de courant instantanées provoquées par une surtension due à la foudre dans un réseau de distribution d'électricité aérien comprenant un premier fil électrique isolé (1) supporté au niveau d'un point de support par un isolateur de support (3), **caractérisé par le fait qu'**il comprend les étapes consistant à :
fournir un deuxième fil électrique isolé (10) pour un relâchement du champ ayant une longueur égale à deux fois la distance qui sépare ledit point de support d'une position prédéterminée le long dudit premier fil électrique isolé (1), ladite position prédéterminée étant telle qu'un amorçage rampant de fuite en surface soit provoqué par une surtension due à la foudre à partir dudit point de support mais ne soit pas suivi d'un courant de suite alternatif, quand un conducteur dudit premier fil électrique isolé (1) est exposé directement ou indirectement à l'extérieur au niveau de ladite position,
disposer ledit deuxième fil électrique isolé (10) pour un relâchement du champ, parallèle audit premier fil électrique isolé (1),
faire supporter la partie centrale dudit deuxième fil électrique isolé (1) par ledit isolateur (3),
connecter électriquement les deux extrémités (8, 8) d'un conducteur dudit deuxième fil électrique isolé (10) pour un relâchement du champ audit conducteur dudit premier fil électrique isolé (1) et
couvrir leurs parties connectées avec des protections isolantes respectives (9, 9).

2. Procédé permettant d'éviter la rupture de fils électriques isolés et les coupures de courant instantanées provoquées par une surtension due à la foudre dans un réseau aérien de distribution d'électricité comprenant un premier fil électrique isolé (1) supporté au niveau d'un point de support par un isolateur de support (3), **caractérisé par le fait qu'**il comprend les étapes consistant à :
fournir un deuxième fil électrique isolé (10) comme une électrode arrière à la terre ayant une longueur égale à la distance qui sépare ledit point de support d'une position prédéterminée le long dudit premier fil électrique isolé (1), ladite position prédéterminée étant telle qu'un amorçage rampant de fuite en surface soit provoqué par une surtension due à la foudre à partir dudit point de support mais ne soit pas suivi d'un courant de suite alternatif, quand un conducteur dudit premier fil électrique isolé (1) est exposé directement ou indirectement à l'extérieur au niveau de ladite position, disposer ledit deuxième fil électrique isolé (10) parallèle audit premier fil électrique isolé (1), connecter électriquement une première extrémité non isolée, (11) d'un conducteur dudit deuxième fil électrique isolé (10) à une borne mise à la terre dudit isolateur de support (3) et isoler une deuxième extrémité isolée dudit conducteur dudit deuxième fil électrique isolé (10) avec un matériau isolant (12), d'une électrode de décharge (4) disposée sur ledit premier fil électrique isolé (1) au niveau de ladite position prédéterminée.

## Patentansprüche

1. Verfahren zum Verhindern eines Bruchs eines isolierten Drahts bzw. Kabels und einer momentanen bzw. augenblicklichen Leistungsunterbrechung, der bzw. die durch eine Blitzüberspannung in einem Freileitungsverteilungssystem bewirkt wird, umfassend einen ersten isolierten Draht (1), der an einem Trage- bzw. Unterstützungspunkt durch einen tragenden- bzw. unterstützenden Isolator (3) getragen bzw. unterstützt wird, **gekennzeichnet durch** ein Umfassen der Schritte:
Bereitstellen eines zweiten isolierten Drahts bzw. Kabels (10) für eine Feldrelaxation, die eine Länge gleich dem Zweifachen eines Abstands von dem Unterstützungspunkt zu einer vorbestimmten Position entlang des ersten isolierten Drahts (1) aufweist, wobei die vorbestimmte Position derart ist, daß ein schleichender Überschlag durch eine Blitzüberspannung von dem Support- bzw. Unterstützungspunkt bewirkt ist, jedoch nicht **durch** einen Wechselstrom-Folgestrom gefolgt ist, wenn ein Leiter des ersten isolierten Drahts (1) entweder direkt oder indirekt an dieser Position an das Freie freigelegt wird,
Anordnen des zweiten isolierten Drahts bzw. Kabels (10) zur Feldrelaxation parallel zu dem ersten isolierten Draht (1),
Unterstützen bzw. Tragen des zentralen Abschnitts des zweiten isolierten Drahts (1) durch den Isolator (3),
elektrisches Verbinden von beiden Enden (8, 8) eines Leiters des zweiten isolierten Drahts bzw. Kabels (10) zur Feldrelaxation mit dem Leiter des ersten isolierten Drahts bzw. Kabels (1) und
Abdecken ihrer verbundenen Abschnitte mit entsprechenden isolierenden Abdekkungen (9, 9).

2. Verfahren zum Verhindern eines Bruchs eines isolierten Drahts bzw. Kabels und einer momentanen bzw. augenblicklichen Leistungsunterbrechung, der bzw. die durch eine Blitzüberspannung in einem Freileitungsverteilungssystem bewirkt wird, umfassend einen ersten isolierten Draht bzw. Kabel (1), der an einem Trage- bzw. Unterstützungspunkt durch einen tragenden bzw. unterstützenden Isolator (3) getragen bzw. unterstützt wird, **gekennzeichnet durch** ein Umfassen der Schritte:
Bereitstellen eines zweiten isolierten Drahts bzw. Kabels (10) als eine geerdete Seiten- bzw. Rückelektrode, die eine Länge gleich einem Abstand von dem Unterstützungspunkt zu einer vorbestimmten Position entlang des ersten isolierten Drahts bzw. Kabels (1) aufweist, wobei die vorbestimmte Position derart ist, daß ein kriechender Überschlag **durch** eine Blitzüberspannung von dem Unterstützungspunkt bewirkt wird, jedoch nicht **durch** einen Wechselstrom-Folgestrom gefolgt werden, wenn ein Leiter des ersten isolierten Drahts bzw. Kabels (1) entweder direkt oder indirekt an dieser Position an das Freie freigelegt wird,
Anordnen des zweiten isolierten Drahts bzw. Kabels (10) parallel zu dem ersten isolierten Draht bzw. Kabel (1), elektrisches Verbinden eines ersten nicht isolierenden bzw. isolierten Endes (11) eines Leiters des zweiten isolierenden Drahts bzw. Kabels (10) mit einem geerdeten Anschluß des unterstützenden Isolators (3) und Isolieren eines zweiten isolierten Endes des Leiters des zweiten isolierten Drahts bzw. Kabels (10) mit Isoliermaterial (12) von einer Entladeelektrode (4), die an dem ersten isolierten Draht bzw. Kabel (1) an der vorbestimmten Position angeordnet wird.
